# FASCICULE DE BREVET EUROPEEN

(11) **EP 3 157 119 B1**
(45) Date de publication et mention de la délivrance du brevet: **14.03.2018**
(21) Numéro de dépôt: 16193203.3
(22) Date de dépôt: 11.10.2016
(51) Int. Cl.: H02J 1/10, H02J 9/06, H02J 50/10, H05H 9/00, H05H 13/04

(54) **ALIMENTATION DE CHARGES INDUCTIVES MULTIPLES D'UN ACCÉLÉRATEUR DE PARTICULE**
VERSORGUNG FÜR MEHRERE INDUKTIVE LASTEN EINES TEILCHENBESCHLEUNIGERS
SUPPLY FOR MULTIPLE INDUCTIVE LOADS OF A PARTICLE ACCELERATOR

(30) Priorité: 13.10.2015 FR 1559717
(43) Date de publication de la demande: 19.04.2017
(73) Titulaire: European Synchrotron Radiation Facility, 38000 Grenoble (FR)
(72) Inventeur: BOUTEILLE, Jean-François, 38360 NOYAREY (FR)
(74) Mandataire: Thibon, Laurent

(56) Documents cités:
- WO-A2-2009/125013
- US-A- 2 839 680
- US-A1- 2010 007 209
- US-A1- 2013 294 110

## Description

### Domaine

La présente demande concerne un dispositif sécurisé d'alimentation d'une pluralité d'électroaimants d'un accélérateur de particules, couplés chacun à un convertisseur attitré.

### Exposé de l'art antérieur

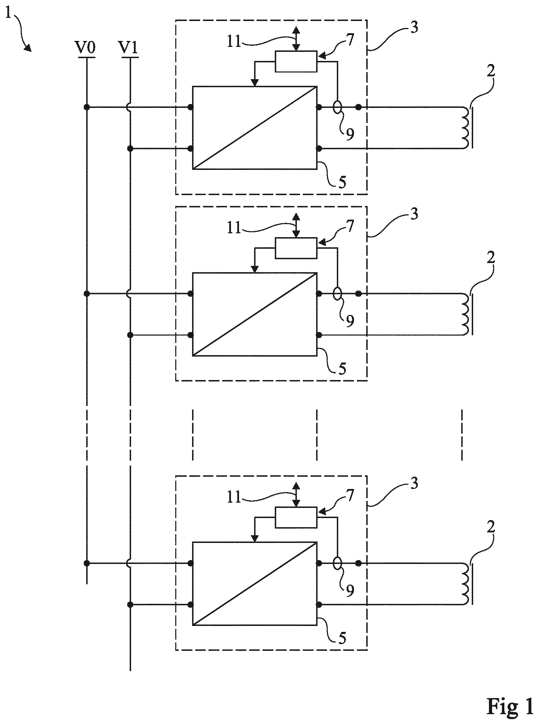

Le document US 2 839 680 A divulgue un dispositif selon le préambule de la revendication 1. Le document WO 2009/125013 A2 divulgue une variante de réalisation dans laquelle plusieurs convertisseurs forment une ressource commune. Chaque convertisseur est affecté aux différentes charges en fonction du besoin instantané de chaque charge et en fonction de la disponibilité de chacun des convertisseurs. De plus, la reconfiguration permet d'améliorer la disponibilité des charges. En effet, en cas de panne d'un convertisseur, un autre convertisseur du même groupe peut immédiatement prendre le relais pour alimenter la charge. Dans un dispositif tel qu'un accélérateur de particules, par exemple un synchrotron et son anneau de stockage, des champs magnétiques sont générés par de nombreux électroaimants. La figure 1 représente un dispositif 1 d'alimentation d'un groupe d'électroaimants 2 d'un accélérateur de particules. Chaque électroaimant est alimenté par un convertisseur attitré 3 comprenant un circuit de conversion 5, par exemple un hacheur série. Chaque convertisseur attitré est alimenté entre des potentiels V0 et V1 pouvant être alternatifs ou continus ou par une source d'énergie triphasée. Chaque convertisseur attitré 3 comprend en outre un circuit de régulation 7 comportant un capteur 9 mesurant le courant fourni par le circuit de conversion 3. Chaque circuit 7 est adapté à rétroagir sur le circuit de conversion associé 5 en fonction d'une valeur de consigne provenant, par une liaison 11, d'un dispositif non représenté supervisant l'ensemble des électroaimants. En fonctionnement, chaque circuit 7 agit en sorte que le courant fourni par le circuit 5 soit égal à la valeur de consigne. La présence d'un convertisseur attitré avec une valeur de consigne pour chaque électroaimant permet de régler finement les caractéristiques du faisceau de particules circulant dans l'accélérateur.

Si la différence entre la valeur de consigne et le courant fourni d'un seul convertisseur 3 dépasse un seuil de tolérance, le faisceau de particules est perdu et l'accélérateur de particules ne fonctionne plus. Or, pour chaque convertisseur, ceci peut se produire en cas de défaillance d'un seul élément, que cet élément soit l'un des composants électroniques du circuit de conversion 5, du circuit de régulation 7, ou de la liaison 11. Un accélérateur de particules peut contenir plusieurs milliers d'électroaimants ce qui multiplie d'autant les risques de panne. Or, la défaillance de l'un des nombreux convertisseurs est une cause importante et fréquente d'arrêt imprévu de l'accélérateur de particules. La durée moyenne de fonctionnement sans arrêt imprévu est donc fortement diminuée.

On souhaite ainsi disposer d'un dispositif d'alimentation d'une pluralité de charges inductives, permettant de régler finement les courants dans chacune des charges inductives et d'assurer une grande durée de fonctionnement sans arrêt imprévu.

### Résumé

Ainsi, selon la présente invention, un mode de réalisation prévoit un dispositif sécurisé d'alimentation d'une pluralité de charges inductives telles que des électroaimants d'un accélérateur de particules couplées chacune à un convertisseur attitré, le dispositif comprenant un convertisseur de secours et, pour chaque charge inductive : une diode de roue libre connectée à la charge inductive ; un circuit de détection d'une anomalie du courant circulant dans la charge inductive ; et un commutateur de sélection commandé par le circuit de détection, adapté à découpler la charge inductive du convertisseur attitré et à coupler la charge inductive audit convertisseur de secours.

Selon un mode de réalisation, le dispositif comprend au moins un autre convertisseur de secours, ledit commutateur de sélection de chaque charge inductive étant adapté à coupler la charge audit au moins un autre convertisseur de secours.

Selon un mode de réalisation, chacun des convertisseurs est adapté à recevoir une valeur de consigne et comprend un circuit de régulation adapté à réguler le courant fourni par le convertisseur en fonction de la valeur de consigne.

Selon un mode de réalisation, le circuit de régulation comprend un capteur de courant de précision supérieure à 20 ppm et le circuit de détection comprend un capteur de courant de précision inférieure à 0,2 %.

Selon un mode de réalisation, l'anomalie est détectée quand l'écart en valeur absolue entre la valeur de consigne et le courant circulant dans la charge inductive est supérieur à un seuil.

Selon un mode de réalisation, le seuil est compris entre 0,01 % et 6 % de la valeur de consigne.

Selon un mode de réalisation, le dispositif comprend pour chacun des convertisseurs des interrupteurs permettant d'isoler le convertisseur du reste du dispositif.

Un mode de réalisation prévoit un procédé d'utilisation d'un dispositif tel que décrit ci-dessus, comprenant, après détection d'une anomalie et sans stopper le dispositif, une étape a) consistant à agir sur le commutateur de sélection pour découpler la charge inductive du convertisseur attitré et coupler la charge inductive audit convertisseur de secours.

Selon un mode de réalisation, le procédé comprend le maintien sous tension d'un convertisseur de secours en l'absence d'anomalie détectée, le convertisseur de secours fournissant une tension de sortie.

Selon un mode de réalisation, le procédé comprend après l'étape a) les étapes suivantes sans stopper le dispositif : b) réparer ou remplacer le convertisseur attitré ; et c) agir sur le commutateur de sélection pour découpler la charge inductive du convertisseur de secours et coupler la charge inductive audit convertisseur attitré.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un dispositif d'alimentation d'une pluralité d'électroaimants ;
la figure 2 représente un mode de réalisation d'un dispositif d'alimentation d'une pluralité de charges inductives ;
les figures 3A et 3B représentent, dans le dispositif de la figure 2, un exemple d'écart entre le courant dans un électroaimant et une valeur de consigne, et la position d'un commutateur ; et
la figure 4 représente un autre mode de réalisation d'un dispositif d'alimentation d'une pluralité de charges inductives.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, les détails de circuits de conversion et d'un circuit de supervision ne sont ni représentés ni détaillés.

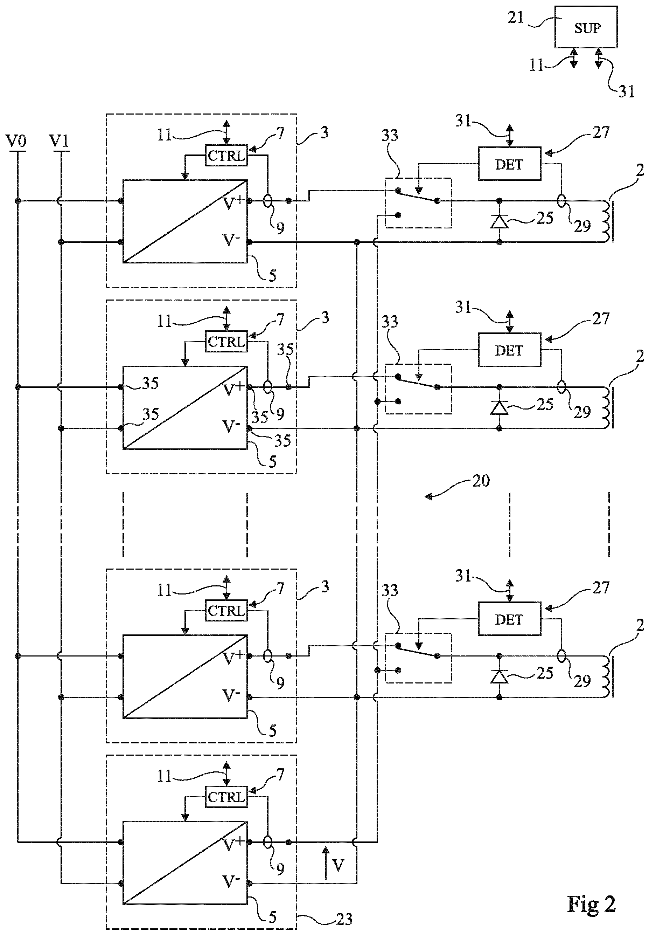

La figure 2 représente un mode de réalisation d'un dispositif sécurisé 20 d'alimentation d'un groupe de charges inductives, par exemple des électroaimants d'un accélérateur de particules muni ou non de son anneau de stockage. L'accélérateur de particules peut être un synchrotron ou un accélérateur à usage médical. Le dispositif 20 comprend un groupe d'électroaimants 2. Chaque électroaimant est associé à un convertisseur 3 attitré. Les convertisseurs 3 sont similaires aux convertisseurs décrits précédemment en relation avec la figure 1, c'est-à-dire que chacun comprend :
un circuit de conversion 5, par exemple un hacheur série ;
un circuit de régulation (CTRL) 7 comportant un capteur 9 mesurant le courant fourni par le circuit de conversion ; et
une liaison 11 entre le circuit de régulation 7 et un dispositif de supervision (SUP) 21 supervisant l'ensemble du dispositif 20.

Les électroaimants 2 peuvent être différents les uns des autres. Les électroaimants 2 ont de préférence des courants d'alimentation similaires, et peuvent avoir des résistances et/ou des inductances différentes. Chaque convertisseur 3 est adapté à fournir, entre des bornes V+ et V-, le courant et la tension correspondant à l'électroaimant associé. Chaque circuit de régulation 7 est adapté à rétroagir sur des paramètres du circuit de conversion associé, par exemple sur le rapport cyclique du hacheur série, de sorte que le courant fourni soit égal à une valeur de consigne. Les circuits de conversion 5 sont par exemple alimentés entre des potentiels V0 et V1 communs à l'ensemble du dispositif. Les circuits de conversion 5 peuvent aussi être alimentés par plusieurs sources d'énergie, pouvant être continues, monophasées ou triphasées.

De plus, le dispositif 20 comprend un convertisseur de secours 23. Le convertisseur 23 comprend les mêmes éléments que les convertisseurs 3, à savoir un circuit de conversion 5, un circuit de régulation 7 comportant un capteur 9, et une liaison 11 avec le dispositif de supervision 21. La liaison 11 peut être une liaison numérique telle qu'une liaison Ethernet.

Le dispositif 20 comprend en outre pour chaque électroaimant 2 :
une diode de roue libre 25 associée à chaque électroaimant, c'est-à-dire une diode connectée en parallèle sur l'électroaimant ;
un circuit de détection (DET) 27 comprenant un capteur de courant 29 et adapté à communiquer par une liaison 31 avec le dispositif de supervision 21 ; et
un commutateur de sélection 33.

La borne de chaque électroaimant 2 du côté de l'anode de la diode 25 associée est couplée aux bornes V- des convertisseurs attitrés 3 et du convertisseur de secours 23. La borne de chaque électroaimant 2 du côté de la cathode de la diode 25 est couplée, selon la position du commutateur 33, à la borne V+ du convertisseur attitré 3 ou à la borne V+ du convertisseur de secours 23.

Le capteur de courant 29 de chaque circuit de détection 27 est positionné pour surveiller l'intensité du courant circulant dans l'électroaimant 2 associé. Dans le mode de réalisation représenté, le capteur 29 est disposé entre l'électroaimant et la cathode de la diode 25. Le capteur 29 peut aussi être disposé entre l'électroaimant et l'anode de la diode 25. Le circuit de détection 27 commande la position du commutateur 33 associé.

En fonctionnement normal de l'accélérateur de particules, tous les convertisseurs attitrés 3 et le convertisseur de secours 23 sont sous tension. Les commutateurs 33 couplent chaque électroaimant 2 à son convertisseur 3 attitré. La sortie du convertisseur de secours 23 est donc ouverte, et la tension entre les bornes de sortie V+ et V- du convertisseur 23 est régulée par le circuit de régulation 7. Le convertisseur 23 fournit alors une tension V.

Le courant circulant dans chaque électroaimant est détecté par le circuit de détection 27 associé et comparé à une valeur de consigne. A titre d'exemple, le circuit de détection 27 communique la valeur du courant au dispositif de supervision 21 qui effectue alors la comparaison. Le circuit de supervision 21 peut aussi transmettre la valeur de consigne au circuit de détection 27 qui, dans ce cas, effectue la comparaison.

En cas de panne d'un convertisseur 3, suite à une défaillance par exemple de son circuit de conversion 5, de son circuit de régulation 7, ou de sa liaison 11, l'électroaimant 2 n'est plus alimenté correctement, et peut ne plus être alimenté du tout. Cependant, le courant continue à circuler dans l'électroaimant, du fait de l'inductance L de l'électroaimant et de la diode de roue libre 25. L'énergie magnétique disponible dans l'électroaimant met du temps à être dissipée par la résistance R de la boucle constituée par la diode et l'électroaimant. Le courant varie donc lentement. Par exemple, la constante de temps L/R est comprise entre 0,2 seconde et 1 seconde.

Au cours de cette panne, l'intensité du courant dans l'électroaimant 2 associé s'écarte progressivement de la valeur de consigne. Le faisceau de particules circulant dans l'accélérateur est maintenu tant que cet écart n'excède pas, en valeur absolue, un seuil de tolérance, par exemple 15 % de la valeur de consigne. Le courant franchit d'abord un seuil de détection, par exemple 1% de la valeur de consigne, inférieur au seuil de tolérance. Une fois que le seuil de détection est franchi, le commutateur 33 associé découple l'électroaimant 2 de son convertisseur attitré 3 et le couple au convertisseur de secours 23. Au même moment, la valeur de consigne est transmise au circuit de régulation 7 de ce convertisseur de secours 23. L'électroaimant est ainsi à nouveau alimenté correctement et l'intensité du courant rejoint la valeur de consigne après une phase transitoire, sans franchir le seuil de tolérance.

L'accélérateur de particules peut alors continuer à fonctionner lors d'une défaillance d'un convertisseur. Ainsi, le dispositif 20 permet d'allonger considérablement la durée de fonctionnement de l'accélérateur de particules sans arrêt imprévu.

On notera qu'au moment où le commutateur 33 change de position, le convertisseur de secours fournit déjà une tension V entre ses bornes de sortie. La présence de cette tension permet de réduire la durée de la phase transitoire et de limiter l'amplitude des variations du courant dans l'électroaimant lors de cette phase. La tension V est adaptée aux tensions d'alimentation des électroaimants. A titre d'exemple, la tension V en circuit ouvert peut être une caractéristique interne du convertisseur 23, la tension V pouvant alors être supérieure aux tensions d'alimentations des électroaimants. La tension V peut aussi être déterminée par le dispositif de supervision 21.

Après la panne, le convertisseur 3 défectueux peut ensuite être démonté au niveau de connexions démontables 35, puis réparé ou remplacé. A titre d'exemple, le remplacement du convertisseur 3 peut être effectué au cours d'une phase de maintenance prévue à l'avance. Le convertisseur 3 peut aussi être remplacé au cours du fonctionnement du dispositif. La réparation ou le remplacement peut être facilité si des interrupteurs non représentés permettent d'isoler chaque convertisseur 3 du reste du dispositif 20. Lorsque le nouveau convertisseur 3 est installé, le commutateur 33 est remis dans la position de fonctionnement normal au cours du fonctionnement de l'accélérateur de particules, et le dispositif revient au fonctionnement normal sans interruption du faisceau.

On notera que les capteurs de courant 29 qui surveillent les courants circulant dans les électroaimants peuvent être moins précis que les capteurs de courant 9 qui servent à réguler précisément ces courants. Par exemple, les capteurs de courant 9 ont une précision supérieure à 20 ppm. Les capteurs de courant 29 peuvent avoir une précision inférieure à 0,2 %. Les capteurs 29 peuvent être des capteurs à effet Hall ou des éléments résistifs.

Ainsi, la détection d'une anomalie du courant dans chaque électroaimant est effectuée par des moyens simples, robustes et bon marché. Les éléments dédiés à la sécurisation du dispositif 20 se résument à quelques éléments simples pour chacun des nombreux convertisseurs et à un convertisseur de secours. Un avantage est que le dispositif sécurisé 20 est un moyen simple et peu coûteux d'augmenter fortement la fiabilité de l'accélérateur de particules.

Le seuil de tolérance, correspondant à l'arrêt de l'accélérateur, peut être compris entre 0,1 % et 20 % de la valeur de consigne. Le seuil de détection, correspondant à une anomalie dans le fonctionnement du convertisseur attitré, peut être compris entre 10 % et 30 % du seuil de tolérance. La comparaison entre le courant et le seuil de détection peut être effectuée par le dispositif de supervision pour chaque électroaimant successivement. Le courant dans chaque électroaimant est alors surveillé de manière cyclique avec une période comprise par exemple entre 100 µs et 1 ms. A titre d'exemple, le franchissement du seuil est détecté si l'écart entre le courant et la valeur de consigne est supérieur au seuil pendant 5 cycles consécutifs.

Les tensions d'alimentation des électroaimants peuvent être comprises entre quelques volts et une centaine de volts, par exemple entre 3 et 150 V. Les courants d'alimentation des électroaimants peuvent être compris entre quelques dizaines et quelques centaines d'ampères, par exemple entre 20 et 500 A. A titre d'exemple, le commutateur 33 est un commutateur à transistors MOS de puissance. Par exemple, les transistors MOS de puissance du commutateur ont une résistance à l'état passant inférieure à 0,5 mΩ. La diode de roue libre 25 est par exemple une diode Schottky de puissance. La liaison 31 peut être une liaison Ethernet.

A titre d'exemple, pour un accélérateur de particules comprenant jusqu'à quelques milliers d'électroaimants, on pourra prévoir quelques centaines de dispositifs 20 comprenant chacune de 3 à 16 électroaimants.

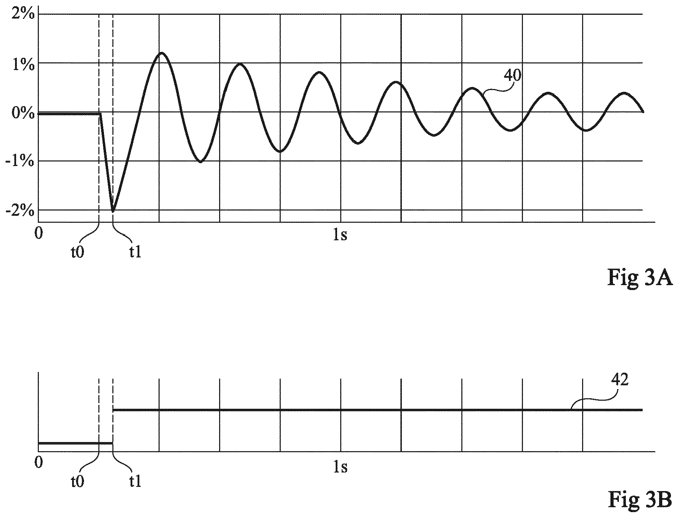

La figure 3A représente, dans le dispositif 20 de la figure 2, un exemple d'écart 40 en pourcentage entre le courant dans un électroaimant et la valeur de consigne 41 associée, lors d'une panne du convertisseur attitré associé à cet électroaimant. La figure 3B représente la position 42 du commutateur, la position basse correspondant au couplage de l'électroaimant à son convertisseur 3 attitré, et la position haute correspondant au couplage de l'électroaimant au convertisseur de secours 23.

A un instant initial t0, une panne du convertisseur 3 attitré se produit, et l'électroaimant n'est plus alimenté. Pendant une vingtaine de millisecondes, le courant circule dans l'électroaimant par la diode de roue libre, en diminuant lentement. Le courant franchit le seuil de détection prévu à un instant t1. Ce franchissement est détecté par le circuit de détection qui change la position du commutateur 33 et couple l'électroaimant au convertisseur de secours 23 déjà sous tension. La tension déjà présente en sortie du convertisseur 23 s'applique à l'électroaimant et le courant dans l'électroaimant augmente sans retard. Puis le courant oscille autour de la valeur de consigne pendant une phase transitoire de quelques secondes, avant de se stabiliser à la valeur de consigne.

La durée et les variations du courant au cours de la phase transitoire dépendent des caractéristiques du circuit de régulation 7 du convertisseur 23. Dans cet exemple, le circuit de régulation 7 du convertisseur de secours 23, par exemple un régulateur PID, est adapté à obtenir, dans le cas où l'électroaimant est remplacé par une charge résistive, un temps de réponse inférieur à la constante de temps de l'électroaimant. Il se produit alors des oscillations telles que représentées. Les inventeurs ont constaté que ces oscillations améliorent le fonctionnement de l'électroaimant en stabilisant le champ magnétique produit.

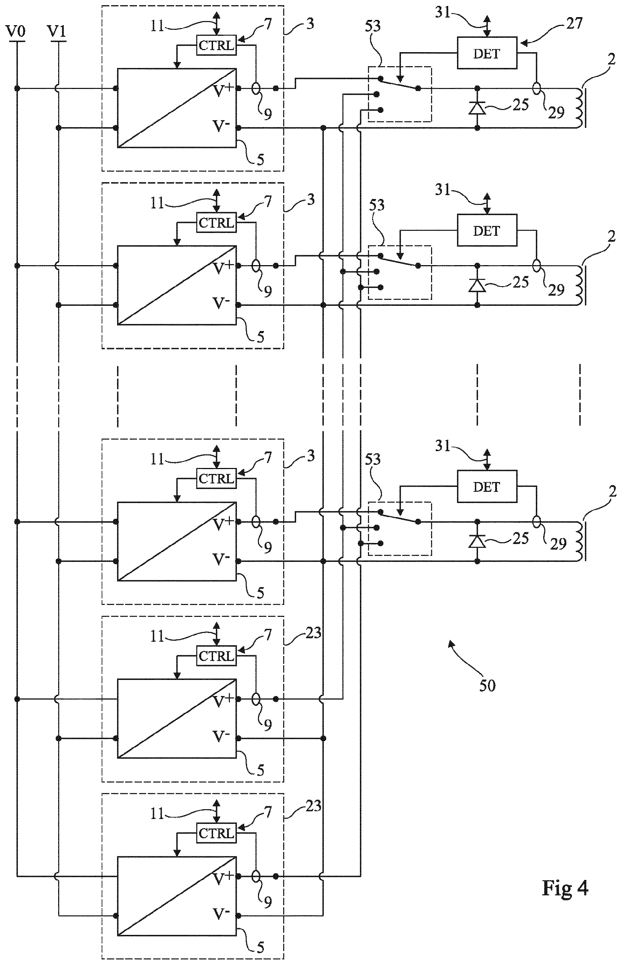

La figure 4 représente un autre mode de réalisation d'un dispositif d'alimentation 50 d'une pluralité de charges inductives, par exemple des électroaimants d'un accélérateur de particules. Le dispositif 50 correspond au dispositif 20 décrit en relation avec la figure 2, auquel un autre convertisseur de secours 23 a été ajouté. Les commutateurs à deux voies du dispositif 20, ont été remplacés par des commutateurs de sélection 53 à trois voies dans le dispositif 50. La borne de chaque électroaimant située du côté cathode de la diode associée est couplée, selon la position du commutateur de sélection 53, à la borne V+ de convertisseur attitré ou à la borne V+ de l'un des convertisseurs de secours ou à la borne V+ de l'autre des convertisseurs de secours.

Le fonctionnement du dispositif 50 est identique au fonctionnement du dispositif 20 représenté en figure 2. Le dispositif 50 permet de maintenir le fonctionnement de l'accélérateur de particules alors que jusqu'à deux convertisseurs sont en panne, ce qui permet avantageusement un fonctionnement plus long sans arrêt imprévu.

Bien que les dispositifs décrits ici aient été prévus dans le cas de pannes provoquant une variation du courant circulant dans un électroaimant, ces dispositifs peuvent aussi être utilisés pour assurer la continuité du fonctionnement d'un accélérateur de particules dans le cas d'autres types de pannes. Les parties métalliques des éléments du dispositif peuvent être connectées à une terre et, à titre d'exemple, la panne peut être une fuite de courant entre un des éléments du dispositif et la terre. Cette fuite est détectée par une différence entre les courants entrant et sortant de l'ensemble du dispositif. Un problème est alors de trouver l'élément responsable de la fuite. On peut effectuer successivement pour chacun des convertisseurs 3 les étapes suivantes :
a) découpler l'électroaimant associé du convertisseur 3 et le coupler à un convertisseur de secours 23 ;
b) isoler le convertisseur 3, par exemple par des interrupteurs ;
c) vérifier la présence de la fuite ;
d) remettre le convertisseur 3 sous tension ; et
e) découpler l'électroaimant du convertisseur de secours et le coupler au convertisseur 3.

L'absence de fuite à l'étape c) montre que le convertisseur 3 concerné est à l'origine de la fuite. Le convertisseur 3 fautif peut être remplacé avant de passer à l'étape d). Ainsi, ce type de panne peut être réparé sans devoir arrêter l'accélérateur de particules.

Des modes de réalisation particuliers ont été décrits. Diverses variantes et modifications apparaîtront à l'homme de l'art. En particulier, bien que dans les dispositifs décrits précédemment une seule borne de chaque électroaimant soit couplée, selon la position du commutateur de sélection, à la borne V+ du convertisseur attitré ou à la borne V+ d'un convertisseur de secours, d'autres variantes sont possibles dans lesquelles le commutateur de sélection est un commutateur bipolaire. Dans de telles variantes, les deux bornes des électroaimants sont couplées simultanément, selon la position du commutateur de sélection, aux bornes V+ et V- du convertisseur attitré ou aux bornes V+ et V-d'un convertisseur de secours.

En outre, bien que les dispositifs décrits précédemment comprennent seulement un ou deux convertisseurs de secours, il est possible d'ajouter d'autres convertisseurs de secours, en ajoutant autant de voies à chaque commutateur de sélection. Chaque convertisseur de secours peut être utilisé en cas de panne de n'importe lequel des convertisseurs attitrés du dispositif. Le fonctionnement est donc assuré pour un nombre de convertisseurs attitrés en panne égal au nombre de convertisseurs de secours. Le nombre de convertisseurs de secours doit donc être adapté au nombre de convertisseurs attitrés. A titre d'exemple, un dispositif comprenant 3 convertisseurs attitrés comporte 1 seul convertisseur de secours. Dans un autre exemple, un dispositif comprenant 16 convertisseurs attitrés comporte 3 convertisseurs de secours et des commutateurs de sélection à quatre voies.

De plus, bien que les dispositifs décrits précédemment soient prévus pour sécuriser l'alimentation des charges inductives dans le cas d'une panne provoquant une diminution du courant dans un électroaimant, l'alimentation peut être sécurisée dans le cas d'une panne provoquant une augmentation du courant dans l'électroaimant. Ceci peut se produire, par exemple, lorsque le circuit de conversion est un hacheur série. Dans ce cas, du fait de l'inductance élevée de l'électroaimant, l'augmentation du courant est lente, et le fonctionnement du dispositif est similaire au fonctionnement décrit dans le cas d'une panne provoquant une diminution du courant.

En outre, bien que, dans les modes de réalisation décrits, les circuits de détection communiquent avec un circuit de supervision, il est possible de prévoir des circuits de détection autonomes détectant un écart entre l'intensité du courant circulant dans l'électroaimant et une valeur fixée à l'avance.

De plus, bien que les circuits de détection communiquent de manière numérique par une liaison Ethernet, il est possible, à titre de variante, de réaliser des circuits de détection analogiques. Les communications peuvent au moins en partie être analogiques.

De plus, bien qu'au cours du fonctionnement normal du dispositif présenté, les convertisseurs de secours soient tous sous tension, d'autres fonctionnements sont possibles dans lesquels par exemple un convertisseur de secours est à l'arrêt, l'important étant qu'un convertisseur de secours soit en mesure de produire un courant dans un délai adapté.

En outre, bien que les dispositifs décrits ci-dessus alimentent des électroaimants d'accélérateurs de particules, ces dispositifs peuvent être utilisés pour l'alimentation d'autres charges inductives.

## Revendications

1. Dispositif (20 ; 50) sécurisé d'alimentation d'une pluralité d'électroaimants (2) d'un accélérateur de particules couplés chacun à un convertisseur attitré (3), **caractérisé par** un convertisseur de secours (23) et, pour chaque électroaimant :
une diode de roue libre (25) connectée à l'électroaimant ;
un circuit de détection (27) d'une anomalie du courant circulant dans l'électroaimant ; et
un commutateur de sélection (33 ; 53) commandé par le circuit de détection, adapté à découpler l'électroaimant du convertisseur attitré et à coupler l'électroaimant audit convertisseur de secours.

2. Dispositif (50) selon la revendication 1, comprenant au moins un autre convertisseur de secours (23), ledit commutateur de sélection (53) de chaque électroaimant étant adapté à coupler l'électroaimant audit au moins un autre convertisseur de secours.

3. Dispositif selon la revendication 1 ou 2, dans lequel chacun des convertisseurs (3, 23) est adapté à recevoir une valeur de consigne et comprend un circuit de régulation (7) adapté à réguler le courant fourni par le convertisseur en fonction de la valeur de consigne.

4. Dispositif selon la revendication 3, dans lequel le circuit de régulation (7) comprend un capteur de courant de précision supérieure à 20 ppm et le circuit de détection (27) comprend un capteur de courant de précision inférieure à 0,2 %.

5. Dispositif selon la revendication 3 ou 4, dans lequel l'anomalie est détectée quand l'écart en valeur absolue entre la valeur de consigne et le courant circulant dans l'électroaimant (2) est supérieur à un seuil.

6. Dispositif selon la revendication 5, dans lequel le seuil est compris entre 0,01 % et 6 % de la valeur de consigne.

7. Dispositif selon l'une quelconque des revendications 1 à 6, comprenant pour chacun des convertisseurs (3, 23) des interrupteurs permettant d'isoler le convertisseur du reste du dispositif.

8. Procédé d'utilisation d'un dispositif selon l'une quelconque des revendications 1 à 7, comprenant, après détection d'une anomalie et sans stopper l'accélérateur de particules, une étape a) consistant à agir sur le commutateur de sélection (33 ; 53) pour découpler l'électroaimant du convertisseur attitré (3) et coupler l'électroaimant (2) audit convertisseur de secours (23).

9. Procédé selon la revendication 8, comprenant le maintien sous tension d'un convertisseur de secours (23) en l'absence d'anomalie détectée, le convertisseur de secours fournissant une tension de sortie (V).

10. Procédé selon la revendication 9, comprenant après l'étape a) les étapes suivantes sans stopper l'accélérateur de particules :
b) réparer ou remplacer le convertisseur attitré (3) ; et
c) agir sur le commutateur de sélection (33 ; 53) pour découpler l'électroaimant (2) du convertisseur de secours (23) et coupler l'électroaimant audit convertisseur attitré.

## Patentansprüche

1. Eine sichere Vorrichtung (20; 50) zum Antreiben einer Vielzahl von Elektromagneten (2) eines Teilchenbeschleunigers, wobei jeder an einen zugeordneten Wandler (3) gekoppelt ist, **gekennzeichnet durch** einen Standby-Wandler (23) und für jeden Elektromagneten:
eine Freilaufdiode (25), die mit dem Elektromagneten verbunden ist;
eine Schaltung (27) zum Erfassen einer Anomalie des Stroms, der durch den Elektromagneten fließt; und
ein Auswahlschalter (33; 53), der von der Erfassungsschaltung angesteuert wird, und der geeignet ist zum Entkoppeln des Elektromagneten von dem zugeordneten Wandler und zum Koppeln des Elektromagneten an den Standby-Wandler.

2. Die Vorrichtung (50) nach Anspruch 1, die wenigstens einen anderen Standby-Wandler (23) aufweist, wobei der Auswahlschalter (53) jedes Elektromagneten geeignet ist, den Elektromagneten an den wenigstens einen anderen Standby-Wandler zu koppeln.

3. Die Vorrichtung nach Anspruch 1 oder 2, wobei jeder der Wandler (3, 23) geeignet ist, einen Setzpunktwert zu empfangen, und eine Regulierschaltung (7) aufweist, die geeignet ist, den Strom zu regulieren, der von dem Wandler gemäß einem Setzpunktwert geliefert wird.

4. Die Vorrichtung nach Anspruch 3, wobei die Regulierschaltung (7) einen Stromsensor mit einer Genauigkeit größer als 20 ppm aufweist, und die Erfassungsschaltung (27) einen Stromsensor mit einer Genauigkeit kleiner als 0,2% aufweist.

5. Die Vorrichtung nach Anspruch 3 oder 4, wobei die Anomalie erfasst wird, wenn der absolute Wert der Differenz zwischen dem Setzpunktwert und dem durch den Elektromagneten (2) fließenden Strom größer als ein Schwellenwert ist.

6. Die Vorrichtung nach Anspruch 5, wobei der Schwellenwert in dem Bereich von 0,01% bis 6% des Setzpunktwertes ist.

7. Die Vorrichtung nach einem der Ansprüche 1 bis 6, die für jeden der Wandler (3, 23) Schalter aufweist, die erlauben, dass der Wandler vom Rest der Vorrichtung isoliert wird.

8. Verfahren zum Verwenden der Vorrichtung nach einem der Ansprüche 1 bis 7, die nach der Erfassung einer Anomalie und ohne Anhalten des Teilchenbeschleunigers Folgendes aufweist: einen Schritt a) des Einwirkens auf den Auswahlschalter (33; 53) zum Entkoppeln des Elektromagneten von dem zugeordneten Wandler (3) und zum Koppeln des Elektromagneten (2) an den Standby-Wandler (23).

9. Verfahren nach Anspruch 8, das das Angeschaltet-Halten eines Standby-Wandlers (23) im Ausbleiben einer erfassten Anomalie aufweist, wobei der Standby-Wandler eine Ausgabespannung (V) liefert.

10. Verfahren nach Anspruch 9, das nach dem Schritt a) ohne Anhalten des Teilchenbeschleunigers die folgenden Schritte aufweist:
b) Reparieren oder Ersetzen des zugeordneten Wandlers (3); und
c) Ansteuern des Auswahlschalters (33, 53) zum Entkoppeln des Elektromagneten (2) von dem Standby-Wandler (23) und zum Koppeln des Elektromagneten an den zugeordneten Wandler.

## Claims

1. A secure device (20; 50) for powering a plurality of electromagnets (2) of a particle accelerator, each coupled to a dedicated converter (3), **characterized by** a standby converter (23) and, for each electromagnet:
a flyback diode (25) connected to the electromagnet;
a circuit (27) for detecting an anomaly of the current flowing through the electromagnet; and
a selection switch (33; 53), controlled by the detection circuit, adapted to decouple the electromagnet from the dedicated converter, and couple the electromagnet to said standby converter.

2. The device (50) of claim 1, comprising at least one other standby converter (23), said selection switch (53) of each electromagnet being adapted to couple the electromagnet to said at least one other standby converter.

3. The device of claim 1 or 2, wherein each of the converters (3, 23) is adapted to receive a set point value and comprises a regulation circuit (7) adapted to regulate the current supplied by the converter according to the set point value.

4. The device of claim 3, wherein the regulation circuit (7) comprises a current sensor having an accuracy greater than 20 ppm and the detection circuit (27) comprises a current sensor having an accuracy smaller than 0.2%.

5. The device of claim 3 or 4, wherein the anomaly is detected when the absolute value of the difference between the set point value and the current flowing through the electromagnet (2) is greater than a threshold.

6. The device of claim 5, wherein the threshold is in the range from 0.01% to 6% of the set point value.

7. The device of any of claims 1 to 6, comprising, for each of the converters (3, 23), switches enabling the converter to be isolated from the rest of the device.

8. A method of using the device of any of claims 1 to 7, comprising, after the detection of an anomaly and without stopping the particle accelerator, a step a) of acting on the selection switch (33; 53) to decouple the electromagnet from the dedicated converter (3) and couple the electromagnet (2) to said standby converter (23).

9. The method of claim 8, comprising keeping a standby converter (23) powered on in the absence of a detected anomaly, the standby converter supplying an output voltage (V).

10. The method of claim 9, comprising after step a), without stopping the particle accelerator, the steps of:
b) repairing or replacing the dedicated converter (3); and
c) controlling the selection switch (33; 53) to decouple the electromagnet (2) from the standby converter (23) and couple the electromagnet to said dedicated converter.
